# EUROPEAN PATENT APPLICATION

(11) **EP 1 630 146 A2**
(43) Date of publication of application: **01.03.2006**
(21) Application number: 05017105.7
(22) Date of filing: 05.08.2005
(51) Int. Cl.: C04B 14/42, E04C 5/07, C04B 28/02

(54) **Structural reinforcing for cement base materials**

(30) Priority: 31.08.2004 IT MI20041682
(71) Applicant: I.C.R.S. Industrial Ceramic Reinforcement Solution S.r.L., 20122 Milano (IT)
(72) Inventor: Giuliani, Giacinto, Dr., 16035 Rapallo (Genova) (IT)
(74) Representative: Lunati, Vittoriano

(57) **Abstract**

A structural reinforcing is foreseen for cement based materials comprising polymeric yarns (2) such as polypropylene and AR glass fibres (3) mixed together in weights that are similar in order to define a compound, and linking means (5) of the yarns (2) and fibres (3) to cement based materials (4), the yarns (2) and fibres (3) define the resistance properties of the materials (4) selectively up until a substantial failure of the same and in correspondence with the failure, and the compound being set in an amount between ten and forty percent of the weight of the cement used in the cement based materials (4).

## Description

This invention relates to the structural reinforcing of cement based materials, such as cement, concrete and cement mixtures used in construction.

As is known, cement based constructions and products, in particular concrete, present a satisfactory resistance to compression but a poor resistance to other stresses.

To compensate this gap it is common knowledge to incorporate to these materials a structural reinforcing such as duly sized and positioned metal reinforcements. The metal reinforcements give the concrete construction good resistance characteristics, but substantially increase the cost for the materials that are used, for the design of the reinforcing and its construction. Furthermore, the preparation of metal reinforcing delays the completion of the construction or similar.

Another inconvenience connected to the use of metal reinforcing is related to the fact that that it is normally connected to prefixed zones and inside of the construction, with the consequent possible and easy damage of the borders of the said constructions when subjected to localized impacts.

Furthermore the reinforcing only acts in the preset direction.

Metal reinforcing is furthermore unsuitable and in fact used very little for small are thin cement items.

Yet another inconvenience is the possibility of cracking when thermally stressed, especially if accentuated.

It has already been tried to resolve the above mentioned inconveniences. In fact it is common to add elements such as yarns or filaments or fibres of different materials in the concrete, cement based mixtures.

In small constructions and constructions that do not undergo particular stresses, the presence of these fibres is determined to obtain satisfactory and reliable products that are also capable of reducing cracking.

The mechanical resistance characteristics given to cement based materials by the fibres are important when the fibres are arranged in an auxiliary fashion to a metal reinforcing.

The said fibres are in any case always insufficient as a structural reinforcing, as a replacement for metal reinforcing where relevant stresses and large constructions exist.

For example, polymeric yarns, particularly those in polypropylene, give the cement based products a good mechanical resistance but totally give way as soon as a force is applied that exceeds the said resistance.

Likewise, glass fibres are also not very suitable to produce structural reinforcing, even if they have very good dispersion properties in the cement based materials. In particular, these also present a rapid deterioration when determined forces are exceeded.

Therefore metal reinforcing is universally used as a structural reinforcing for cement based materials in all cases of substantial stress and sizable constructions.

In this situation the technical aim at the base of the present invention is to invent a structural reinforcing for cement based materials capable of overcoming the said inconveniences.

Within the said technical aim is an important object of the invention to invent a structural reinforcing capable of satisfactorily conferring resistance and reliability to cement based constructions and items and therefore able to replace metal reinforcing, or at least reduce its presence.

Another important aim of the invention is that of inventing a structural reinforcing that will reduce costs both for the materials used as well as for the simple design and rapid construction.

Another important aim of the invention is that of inventing a structural reinforcing that is active in all directions and all zones of a construction or product, and suitable for the production of small and thin products.

Another important aim of the invention is that of inventing a structural reinforcing capable of satisfactorily resisting thermal stresses.

The technical aims and specified objects are obtained by a structural reinforcing for cement based as claimed in the annexed Claim 1.

The preferred embodiments are highlighted in the subclaims.

An example of the preferred embodiment of the invention is illustrated in the attached drawings
**Fig. 1** shows in a block diagram some of the embodiment phases of the structural reinforcing according to the invention;
**Fig. 2** illustrates with another block diagram the formation phases of a concrete conglomerate that includes the structural reinforcing according to the invention;
**Fig. 3** highlights a bending strength diagram of concrete without reinforcing, the bend values are indicated in X in millimetres (mm) in the said diagram, and the applied force in kNewton (kN) in Y;
**Fig. 4** is a diagram that shows the bending strength of the concrete of Fig. 3 with the introduction of polypropylene yarns;
**Fig. 5** presents with a diagram the bending strength of the concrete in Fig.3 with the introduction of glass fibres; and
**Fig. 6** shows with another diagram the bending strength of the concrete in Fig. 3 with the introduction of structural reinforcing according to the invention.

With reference to Figures, the structural reinforcing according to the invention is indicated with the number **1.** This is a compound or hank that is defined by polymeric yarns **2** and glass fibres **3** that are embedded in a cement based material, in particular in concrete **4.**

As is known the concrete generally includes, as a fundamental element, cement **4a,** aggregate **4b** of various types and granulometry, solid additives **4c,** and water and liquid additives **4d.** The cement 4a is in a variable quantity depending on the type of concrete desired. The aggregate 4b can be defined by a large aggregate (gravel or rubble), and/or a medium aggregate, and/or a fine aggregate (sand). The quantities of the water and liquid additives 4d can also vary depending on the property of the concrete to be obtained.

The polymeric yarns 2 are preferably in polypropylene and, if considered separately, are known as such.

The yarns 2 positively increase the mechanical resistance characteristics of the concrete: the bending strength for example.

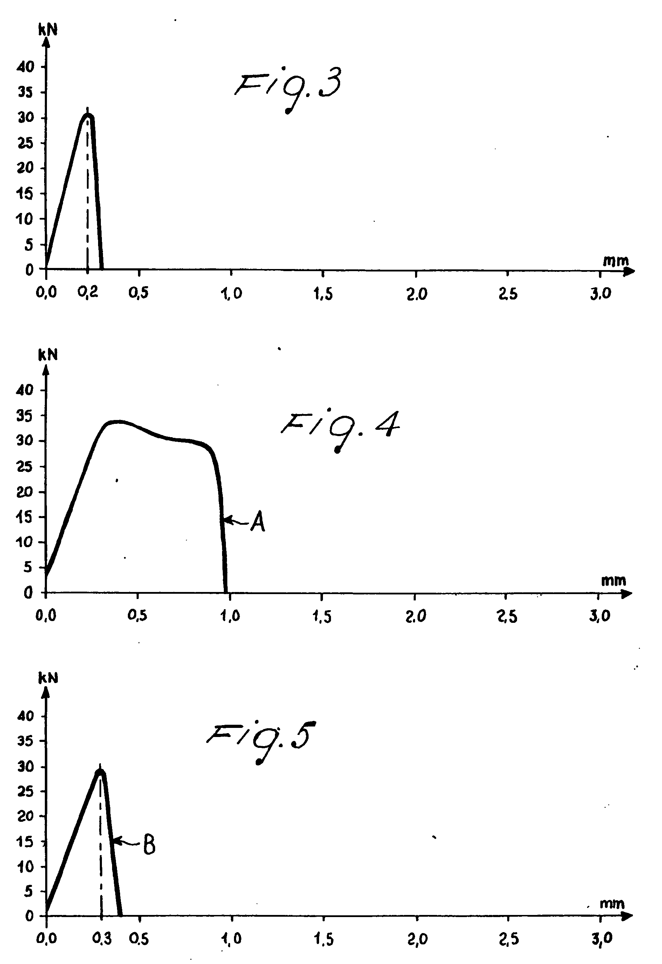

Fig. 3 and 4 highlight that the bending strength of concrete 4 without reinforcing (fig. 3) is notably increased when polypropylene yarns 2 are introduced (Fig. 4).

In fact they increase the maximum applicable force as well as the bend values that can be accepted.

The maximum forces increase by approximately thirty to thirty-five kilo Newton and the deformations that occur without breaking, meaning that it maintains a good resistance to the applied forces, increase from just a few tenths of a millimetre to nearly one millimetre.

However, as Fig. 4 always shows, the curve that indicates the applied force and the corresponding deformation substantially declines vertically at the end **A**, in the same way as the force/deformation of the fibre free concrete, highlighted in Fig. 3. This means that the concrete with the polypropylene yarns 2 fail completely, suddenly, as does the yarn free concrete, even if this occurs after a greater resistance to the forces and a greater deformation under permanent resistance of the forces.

If for example an increasing flexion load is applied to a concrete beam that is only reinforced with yarns 2, a sudden and total failure of the beam can be expected. This is an extremely negative situation in building constructions because it does not permit to intervene with rapid operations to lessen the load or to reinforce or - even in extreme cases - to save people in danger.

Another type of reinforcing is created by glass fibres 3, preferably in AR type glass (Alkaline resistant).

The AR glass fibres 3 are also well known and have optimum insensitivity to high temperatures and can support the direct exposure temperatures of six hundred and fifty degrees centigrade or over without any problem.

Thereby they exceed the polypropylene yarns 2, that when directly exposed have a limit of approximately two hundred degrees centigrade.

Therefore they give to the concrete 4 that includes the said fibres 3, an optimum resistance to fire, as well as reasonable mechanical properties even if they are normally less than those given by the polypropylene yarns 2.

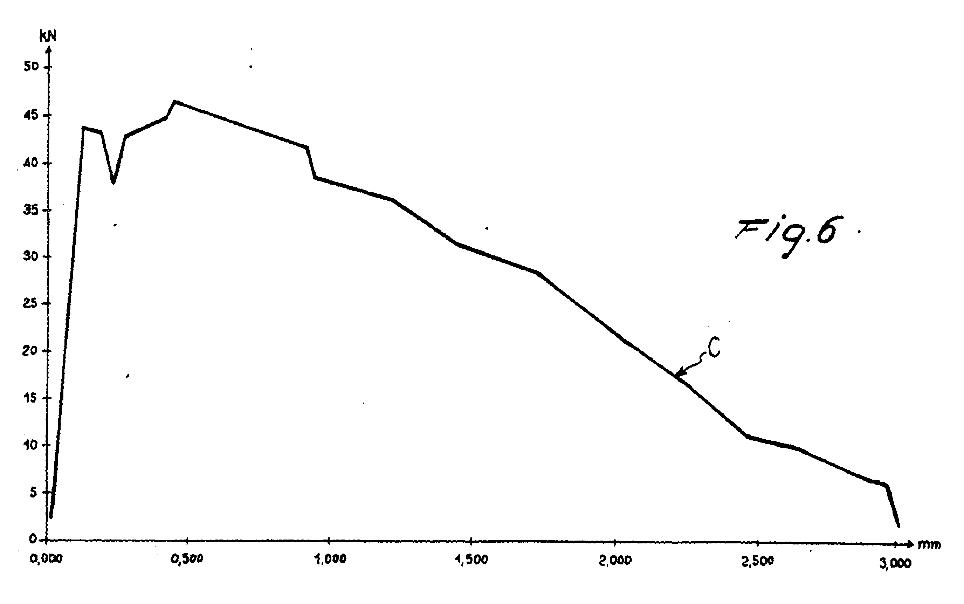

This fact is highlighted in Fig. 5 that shows the bend strength of a concrete (the same used in Fig. 3) when the AR glass fibres 3 only are introduced.

The applied forces remain within thirty kilo Newton, but the concrete has greater flexibility both regarding its deformation under maximum load, that varies from approximately 0.2 millimetres of Fig. 3, to approximately 0.3 millimetres of Fig. 5, as well as regarding the maximum breaking deformation, that occurs at around 0.4 millimetres.

However, the curve in Fig. 5, which indicates the applied force and corresponding deformation, has a rapidly declining final section **B** that is basically vertical.

This means that the concrete with glass fibres 3 also fail totally once the maximum stress is exceeded.

Therefore a substantial similarity exists between the properties of the single yarns 2 and fibres 3 that is not complementary: both improve the properties of the concrete, but both cause the concrete to fail totally, suddenly, after reduced deformation, equal to concrete without the yarns 2 or fibres 3.

Surprisingly, notwithstanding this non complementariness, the invention achieves great advantages foreseeing that the polypropylene yarns 2 and glass fibres 3 are used in combination to one another in order to form a compound or hank that is defused in the concrete 4.

The compound is bound to the concrete 4 by means of a linking means 5, which contains both the yarns 2 and fibres 3.

The linking means 5 are defined by a binding substance 5a and/or by the geometrical characteristics of the yarn or fibre.

The binding substance 5a - or simply binder - includes, in a watery solution, a mixture of silane, non reactive polyurethane emulsions and polyethylene with a high molecular weight.

The binder 5a activates the cement 4a and aggregate 4b adhesion and is preferably applied to the raw AR glass fibres 3a (but if necessary to the yarns 2 as well) during its formation.

In fact fibres 3 are made up by single flosses or filaments that are bundled together each group containing more than a thousand flosses or filaments. To obtain the maximum resistance, each bundle groups together between 1500 and 2500 flosses.

The floss or filament bundles, covered with the binder 5a, are cut and dried to polymerize the binder by evaporating the watery part.

The linking means 5 are additionally or alternatively made from the geometrical characteristics of the yarns 2 and/or fibres 3, achieved in transversal sections different from the circular ones, in order to increase the surface - and therefore the contact zone - equal to the volume.

The sections can be either square, trapezoidal, triangular, splayed or variously profiled.

The polypropylene yarns 2 are preferably shaped that can be easily produced by means of extrusion starting with the polymeric material **2a.**

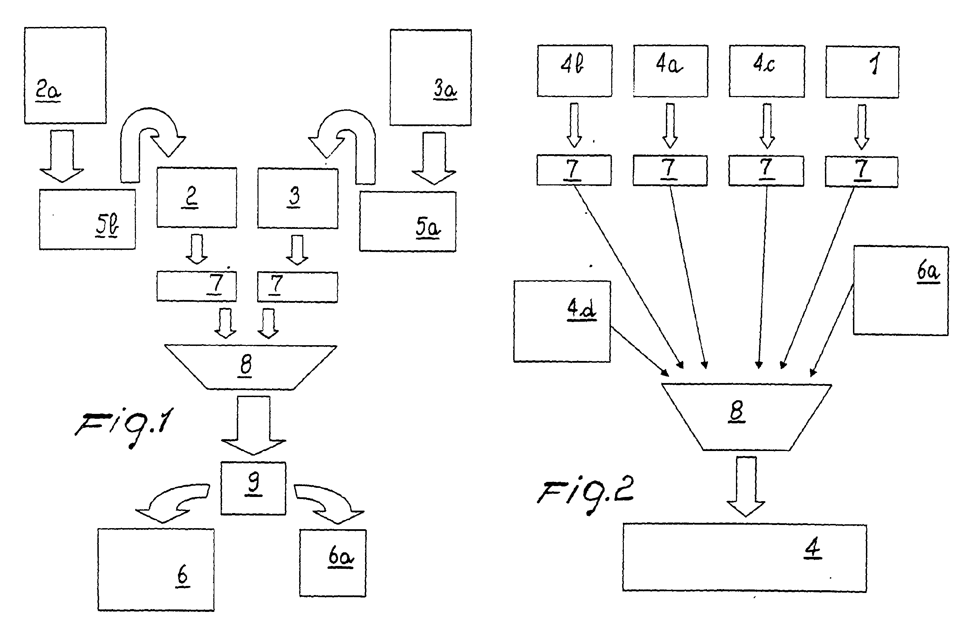

In Fig. 1 is illustrated with **5b** an extrusion and shaping phase of the yarns 2.

In the preferred embodiment, the polypropylene yarns 2 and glass fibres 3 are selected for the formation of the said compound both having similar dimensions as well as similar weights. For instance, there are differences less than 20%.

They also have varying lengths and sections depending on the end use to obtain the best result.

Concrete for panels or thin products can include yarns and fibres with lengths of approximately one millimetre, while larger constructions and larger aggregate 4b can have yarns and fibres of up to fifty millimetres. On average the foreseen lengths are between five and thirty five millimetres.

The transversal dimensions are essentially comprised between fifteen and fifty micron and on average are between twenty five and thirty five micron.

All in all, the overall quantity of yarns 2 and fibres 3 is between ten and forty percent of the weight of the cement 4a, based on the characteristics that are required and based on the foreseen amount of cement in the concrete.

The yarn 2 and fibre 3 compound made as described, gives new and amazing properties to the concrete 4.

Fig. 6 highlights the bending strength of a concrete which includes the said compound.

The concrete is the same type used for the diagram in Fig. 3, the yarns 2 are the same as those used for the diagram in Fig. 4 and the fibres 3 are the same as those used for the diagram in Fig. 5.

It is evident that the applied force curve and the corresponding deformation have maximum applied force values greater than those in the presence of only polypropylene yarns 2 (Fig. 4) or glass fibres (Fig. 5), and that above all the vertically declining final sections A and B no longer exist.

The maximum applicable force is in fact around forty/forty-five kNewton and the final section C descends very gradually, in such a manner that the resistance to the applied force is annulled after a gradual and ample flexion, over three millimetres as in the graph of Fig. 6.

Therefore concrete with the said compound fail very slowly once the breaking point has been reached, thereby ensuring notable safety levels to building constructions.

This amazing result is not foreseeable from the examination of the curves of the diagrams in Fig. 4 and 5, which demonstrate a rapid declining section A or B. It is believed that this result is due to a kind of natural and gradual distribution of tasks between the yarns 2 and the fibres 3.

It is possible that the elements that are more rigid or tense or bonded better, mostly the polypropylene yarns 2, which individually normally give greater mechanical properties to the concrete than those given by polypropylene yarns, cooperate together to resist the applied forces in situations of loads lower than fail loads.

It is supposed that with greater loads the yarns fail at a determined level, causing the glass fibres 3 to intervene for the most part. These are not capable of stopping the failure but slow it significantly.

Basically, the prognosis of a yarn and fibre compound as described, both linked to the concrete and evenly dispersed in it, determine a distinct and selective intervention of the various elements of the compound and a very gradual failure, after the excessive maximum resistance has been reached.

Another positive and amazing effect of the said yarn 2 and fibre 3 compound is the fire resistance of the concrete in which it is incorporated.

In fact the reinforced concretes resistance to high temperatures is the same or greater than that of the AR glass fibres 3, that if directly exposed have a resistance limit at approximately six hundred and fifty degrees centigrade, despite the presence of the polypropylene yarns 2 that, if directly exposed, have a melting temperature of around two hundred degrees.

It is supposed that when the concrete is exposed to fire, the yarns 2 melt creating vents of vapour created by the water in the concrete, and that the presence of glass fibres prevents the disintegration,of the concrete.

For an immediate and convenient use of the compound, it is prepared in containers 6 with determined capacities.

In particular the containers 6 contain single-dose sacks 6a including a determined minimum quantity of polypropylene yarns 2 and glass fibres 3.

Furthermore, the containers 6, or at least the single-dose sacks 6a, are water-soluble so that they can be directly introduced into the cement mixture.

The invention also illustrates a process for the accomplishment of a structural reinforcing 1 as described above.

To outline, this consists in selecting polypropylene yarns 2 and glass fibres 3 aimed at defining the resistance properties of cement based material such as concrete 4, in providing the yarns 2 and fibres 3 with linking means 5 to the concrete, and in mixing the polypropylene yarns 2 and glass fibres 3 in a manner to create a compound that generates in an even manner in the concrete 4 or similar material.

More specifically, the process comprises various phases that are highlighted in Fig. 1 and 2.

First and foremost it foresees to produce polypropylene yarns 2 and AR glass fibres 3 equipped with linking means 5.

Yarns 2 are produced commencing from a polymeric material 2a, and the yarns are produced and shaped by means of an extrusion phase 5b.

Yarns 2 are given a shape that is not circular, flat for example.

Fibres 3 are produced commencing from raw fibres 3a and impregnating them with the previously clarified binder 5a, through an impregnation phase.

Weighing 7 and cold mixing 8 phases of the yarns 2 and fibres 3 are also foreseen, so as not to damage them and so as to have the components in the exact doses. In this way a compound of elements is obtained that, upon weighing 9, is placed in containers 6 with a predetermined capacity. Single-dose sacks 6a are also used as containers.

Originally, the compound is introduced into a cement mix while it is still in the container 6, that are preferably water soluble.

The formation of a concrete 4 incorporating the compound is schematically highlighted in Fig. 2.

This highlights that firstly the cement 4a, aggregates 4b, the additives 4c and the compound of yarns 2 and fibres 3 are made available, if necessary in the form of a single-dose sack 6a. Followed by the weighing and mixing phases of the said elements. The single-dose sacks 6a are introduced without opening the water-soluble wrapping.

It is foreseen that the compound is introduced into a cement mixture before the liquids are introduced. The water 4d is then measured and introduced together with the liquid additives, and after mixing the mix is ready for use.

The invention attains important advantages.

In fact it makes available a structural reinforcing that permits to produce cement based products, items and constructions with satisfactory resistance as well as notable reliability, overcoming both the inconvenience of metal reinforcing as well as the previous limitations for reinforcing yarns, fibres and filaments.

## Claims

1. Structural reinforcing for cement-based materials, **characterised in that** it comprises polymeric yarns (2) and glass fibres (3) that are mixed together in order to establish a compound, and linking means (5) of said yarns (2) and fibres (3) to cement based materials (4); said yarns (2) and fibres (3) defining the resistance properties of said material (4) selectively until their substantial failure and in correspondence with the said failure.

2. Structural reinforcing according to Claim 1, in which said yarns (2) are in polypropylene and said fibres (3) are in AR glass (Alkaline Resistant).

3. Structural reinforcing according to Claim 1, in which in said compound said yarns (2) and fibres (3) have weights that are similar to one another.

4. Structural reinforcing according to Claim 1, in which said compound is of an amount between ten and forty percent of the weight of the cement used.

5. Structural reinforcing according to Claim 1, in which in said compound said yarns (2) and fibres (3) have similar dimensions to one another and have lengths between one and fifty millimetres and cross dimensions between fifteen and fifty micron.

6. Structural reinforcing according to Claim 1, in which said linking means include a watery solution binder defined by a mixture of silane, non-reactive polyurethane emulsions and polyethylene with a high molecular weight.

7. Structural reinforcing according to Claim 1, in which said linking means are made with geometrical characteristics that are different from the circular ones, in order to increase the surface in par with the volume.

8. Structural reinforcing according to Claim 1, in which said yarns (2) are extruded fibres that have a sectional shape that is not circular.

9. Structural reinforcing according to Claim 1, in which each of said fibres (3) is defined by a bunch that includes more than a thousand single filaments or flosses.

10. Structural reinforcing according to Claim 1, in which said compound is set in water-soluble containers (6) with preset capacities, so that they can be introduced directly into a cement mix.

11. Process for the attainment of a structural reinforcing for cement based materials, **characterised in that** it consists in selecting of polymeric yarns (2) and glass fibres (3) aimed at increasing the resistance properties of said materials, in endowing said yarns (2) and fibres (3) with a linking means (5) to said materials, and in mixing said yarns (2) and fibres (3) in a manner aimed at producing a compound that is evenly distributed throughout the said materials.

12. Process according to Claim 11, in which said yarns (2) are produced through the extrusion of polypropylene in order to form a shaped section that is not circular.

13. Process according to Claim 11, in which said yarns (2) and glass fibres (3) are cold mixed together in order to produce the said hank before the introduction of the said yarns (2) and fibres (3) into a cement material.

14. Process according to Claim 13, in which said hank is set with said yarns (2) and fibres (3) already mixed together in water-soluble containers (6), and in which said hank is introduced into a cement mixture while still in said containers (6) and prior to the introduction of liquids into said cement mixture.
